(19) Europäisches Patentamt
European Patent Office
Office européen des brevets

(11) **EP 2 111 569 B1**

(12) **EUROPÄISCHE PATENTSCHRIFT**

(45) Veröffentlichungstag und Bekanntmachung des Hinweises auf die Patenterteilung:
**21.07.2010 Patentblatt 2010/29**

(21) Anmeldenummer: **08774952.9**

(22) Anmeldetag: **09.07.2008**

(51) Int Cl.:
*G05B 11/28* (2006.01)     *G05B 11/42* (2006.01)
*G05B 21/02* (2006.01)     *G05F 1/70* (2006.01)

(86) Internationale Anmeldenummer:
**PCT/EP2008/058948**

(87) Internationale Veröffentlichungsnummer:
**WO 2009/007407 (15.01.2009 Gazette 2009/03)**

(54) **REGELVERFAHREN UND REGELVORRICHTUNG MIT MEHRKANALIGER RÜCKFÜHRUNG**

CLOSED-LOOP CONTROL METHOD AND CLOSED-LOOP CONTROL DEVICE WITH MULTI-CHANNEL FEEDBACK

PROCÉDÉ DE RÉGULATION ET DISPOSITIF DE RÉGULATION À RÉTROACTION MULTICANAL

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **12.07.2007 DE 102007032484**

(43) Veröffentlichungstag der Anmeldung:
**28.10.2009 Patentblatt 2009/44**

(73) Patentinhaber: **Beckhoff Automation GmbH**
**33415 Verl (DE)**

(72) Erfinder: **KRAH, Jens Onno**
**42113 Wuppertal (DE)**

(74) Vertreter: **Patentanwaltskanzlei WILHELM & BECK**
**Prinzenstrasse 13**
**80639 München (DE)**

(56) Entgegenhaltungen:
WO-A-2005/111402     DE-A1- 19 961 798
DE-A1-102005 023 453     DE-C1- 4 000 663
US-A1- 2006 022 657

**Beschreibung**

Die Erfindung betrifft ein Regelverfahren, insbesondere ein Stromregelverfahren für induktive Lasten, wie z. B. Servomotoren. Das Regelverfahren zeichnet sich durch eine zwei- bzw. mehrkanalige Auswertung der Regelgröße aus, mit der eine schnelle und genaue Regelung realisiert werden kann. Die vorzugsweise mithilfe der Pulsweitenmodulation realisierte Regelung weist eine hohe Störunterdrückung und gleichzeitig eine hohe Bandbreite auf. Die Erfindung betrifft auch eine entsprechende Regelvorrichtung mit einer zwei- bzw. mehrkanaligen Rückführung.

Viele technische Prozesse erfordern das Halten einer Regelgröße auf einem durch eine Führungsgröße vorgegebenen Sollwert. Hierzu werden Regelsysteme verwendet, bei denen die Regelgröße fortlaufend erfasst, mit der Führungsgröße verglichen und abhängig von diesem Vergleich über entsprechendes Einstellen einer Stellgröße im Sinne einer Angleichung an die Führungsgröße angepasst wird. Der daraus entstehende Wirkungsablauf findet in einem geschlossenen Regelkreis statt. Abhängig von der jeweiligen Anwendung kommen als Regelgröße verschiedene physikalische Größen in Frage, z. B. Druck, Temperatur, Drehzahl, Geschwindigkeit, Spannung, Stromstärke, etc. Dabei können die für einen geschlossenen Regelkreis charakteristischen und für den Wirkungsablauf notwendigen Komponenten, z. B. Mess-, Vergleichs-, Regel- oder Stelleinrichtung je nach Anwendung sehr unterschiedlich ausfallen. Abgesehen von wenigen Ausnahmen werden moderne Regelsysteme fast ausschließlich schaltungstechnisch realisiert. Dies trifft vor allem auf komplexere Regelsysteme zu. Das Spektrum dieser Regelsysteme reicht dabei von einfachen analogen Regelschaltungen bis zu digitalen Reglern. Neben einer schaltungstechnischen Lösung kann ein digitaler Regelalgorithmus auch in Form eines Programms realisiert werden, das auf einem Mikroprozessor oder in einen programmierbaren Baustein (FPGA) abläuft. Aufgrund der digitalen Signalverarbeitung und der damit verbundenen Modifizierbarkeit eignet sich der Digitalregler besonders gut für komplexere Regelaufgaben, bei denen es auf eine besonders hohe Genauigkeit und exakt reproduzierbare Parameter ankommt.

Bei den Reglern kann unter anderem zwischen stetigen Reglern und Abtastreglern unterschieden werden. Einen typischen stetigen Regler stellt ein analoger Regler dar. Da der analoge Regelalgorithmus praktisch ohne Verzögerungen auf Änderungen der Eingangsgröße reagieren und eine entsprechende Ausgangsgröße auf seinen Ausgang legen kann, bestehen Eingangs- und Ausgangsgröße dieses Reglertyps charakteristischer Weise aus kontinuierlichen Signalen. Im Unterschied hierzu handelt es sich bei einem digitalen Regler um einen Abtastregler. Seine Übertragungsfunktion wird durch eine Folge arithmetischer Operationen realisiert, die nacheinander durchgeführt werden. Aufgrund der benötigten Rechenzeit für den digitalen Regelalgorithmus tritt zwischen dem Erfassen der Eingangsgröße und dem Ausgeben der Ausgangsgröße eine zeitliche Verzögerung auf. Da während der Ausführung des Regelalgorithmus typischerweise keine erneute Erfassung und Berechnung der Eingangsgröße stattfindet, wird die Regelgröße nicht kontinuierlich, sondern nur zu bestimmten Abtastzeitpunkten erfasst. Folglich liefert die digitale Abtastung diskontinuierliche, zeitdiskrete Signale, wobei die Signalgröße nur zu diskreten Zeitpunkten vorliegt. Die Zeit zwischen zwei aufeinander folgenden Abtastzeitpunkten (Zykluszeit $T_A$) bestimmt die Abtastrate bzw. die Abtastfrequenz $f_A$. Eine hohe Abtastrate ist notwendig, um auch höherfrequente Signalanteile der Regelgröße erfassen zu können. Die für einen Digitalregler kennzeichnende obere Grenze der Abtastrate wird in erster Linie durch die für den Rechenalgorithmus benötigte Rechenzeit bestimmt. Sie hängt somit von der Rechengeschwindigkeit des verwendeten Mikroprozessors, Mikrocontrollers bzw. vom FPGA ab.

Zur Realisierung eines Regelsystems werden Regler benötigt, die ein auf die jeweilige Anwendung zugeschnittenes Regelverhalten aufweisen. Hierzu existiert eine Reihe einfacher Regelglieder, deren charakteristische Regeleigenschaften sich jeweils mittels elementarer Übertragungsfunktionen beschreiben lassen. Durch Kombination mehrerer solcher Regelglieder lassen sich komplexere Regler aufbauen, deren Regelverhalten besser an die Vorgaben der jeweiligen Anwendung angepasst werden kann.

Eine typische Reglerkombination stellt z. B. der PI-Regler dar. Dieser Reglertyp umfasst einen Proportionalregler und einen parallel dazu geschalteten Integralregler. Während das Proportionalglied den Eingangswert mit einem festen Faktor multipliziert, führt das Integralglied eine parametrierbare zeitliche Integration der Regelabweichung durch. Der relativ schnelle Proportionalregler bildet dabei eine gute Ergänzung zu dem vor allem auf länger andauernde Regelabweichungen ansprechenden Integralregler. Da der PI-Regler die Regeleigenschaften seiner beiden Komponenten in sich vereinigt, kann er sowohl relativ schnell auf Änderungen der Regel- oder Führungsgröße reagieren als auch kleine statische Regelabweichungen stationär gegen Null führen. Ein solches Regelverhalten ist in vielen technischen Anwendungen gewünscht, was mitunter den Grund für eine weite Verbreitung dieses Reglertyps darstellt.

Ein sehr wichtiges Anwendungsgebiet des PI-Reglers stellt die Stromregelung elektrischer Antriebe dar. Solche Antriebe weisen als zentrale Komponente einen Elektromotor auf, der als Energiewandler die ihm zugeführte elektrische Energie in mechanische Energie umsetzt. Die mechanische Energie stellt ein rotatorischer Motor als Drehbewegung an einer Motorwelle zur Verfügung, während ein Linearmotor diese als Translation an einem beweglichen Schlitten zur Verfügung stellt. Dabei tritt abhängig von der zugeführten elektrischen Energie an der Motorwelle bzw. am Motorschlitten ein bestimmtes Drehmoment bzw. eine bestimmte Kraft auf, woraufhin die Motorwelle bzw. der Motorschlitten abhängig von den wirksamen Gegenkräften eine Bewegung ausführt. Um diese Bewegung zu steuern, weist der elektrische Antrieb eine Stromregelvorrichtung auf, die einen zentralen Regelkreis einer Antriebssteuerung bildet. Mithilfe der vorzugsweise auf einem PI-Regler aufbauenden Stromregelvorrichtung wird der durch die Motorwicklung fließende Strom und damit die vom Elektromotor abgegebene mechanische Energie unmittelbar beeinflusst. Um die dem Elektromotor zugeführte elektrische Energie zu portionieren, wird eine Stelleinrichtung verwendet. Mit ihrer Hilfe ist es möglich, die an der Motorwelle bzw. am Motorschlitten wirkenden Kräfte entsprechend der Vorgabe des PI-Reglers einzustellen. Stelleinrichtungen moderner elektrischer Antriebe verwenden Leistungshalbleiter, wie z. B. Leistungstransistoren, über die die elektrische Energiezufuhr zum Motor an- und abgeschaltet werden kann.

Lagegeregelte Antriebe und insbesondere die in der industriellen Fertigung eingesetzten Servoantriebe benötigen eine sehr genaue Stromregelung, um das Drehmoment bzw. die Kraft und die sich daraus ergebende Bewegung des Servomotors präzise steuern zu können. Eine schnelle und genaue Stromregelung ist ferner für eine hohe Steifigkeit des Antriebs und hohe Kreisverstärkungen eines überlagerten Drehzahlregelkreises erforderlich. Mithilfe einer genauen Stromregelung können auch Vorsteuerungen effizient genutzt werden. Eventuell auftretende Strom- bzw. Drehmomentfehler müssen dann nicht erst vom langsameren Drehzahlregler kompensiert werden.

Da für eine schnelle Reaktion des Regelkreises auf Schwankungen der Regelgröße die genaue Kenntnis des aktuellen Istwerts der Regelgröße notwendig ist, ist die Schnelligkeit und die Genauigkeit der Istwert-Erfassung eine äußerst wichtige Eigenschaft des Regelkreises. Zur Erfassung des Istwerts der Regelgröße können grundsätzlich verschiedene Messmethoden verwendet werden, wobei sich die einzelnen Messmethoden im Hinblick auf ihre Genauigkeit und Schnelligkeit teilweise deutlich unterscheiden. Neben der kontinuierlichen Regelgrößen-Erfassung, die vor allem für analoge Regler charakteristisch ist, kann die Regelgröße auch diskontinuierlich mithilfe eines Abtastverfahrens erfasst werden. Insbesondere bei digitalen Reglern ist das Abtasten der Regelgröße mit einer durch den Arbeitstakt des Reglers vorgegeben Abtastfrequenz üblich.

Beim Abtasten der Regelgröße muss allerdings das Abtasttheorem berücksichtigt werden, um mögliche Messfehler durch höherfrequente Anteile des Messsignals zu vermeiden. Hierzu bieten sich mehrere Möglichkeiten an. Zum einen kann die Regelgröße mithilfe eines Anti-Aliasing-Tiefpassfilters bandbegrenzt werden. Hierbei werden hochfrequente Anteile des Messsignals herausgefiltert. Allerdings eignet sich diese Methode aufgrund der damit verbundenen Phasenverschiebung nicht für jede Anwendung. Die höherfrequenten Anteile können ferner durch eine Mittelung der Messwerte über einen geeigneten Zeitraum unterdrückt werden. Als geeigneter Zeitraum bietet sich insbesondere bei einem mithilfe einer Pulsmodulation, wie z. B. einer Pulsweitenmodulation (PWM), arbeitenden Regelverfahren eine Schaltperiode der Pulsmodulation an. Allerdings bringt die mit der Mittelwertbildung verbundene zusätzliche Totzeit ebenfalls eine unerwünschte Phasenverschiebung mit sich. Schließlich kann die Regelgröße bei einem Regelverfahren, das eine Pulsmodulation zum Einstellen der Regelgröße nutzt, auch synchron zu der Pulsmodulation abgetastet werden. Diese Messmethode ist allerdings abhängig von der Existenz und der Kenntnis bestimmter oberschwingungsfreier Zeitpunkte der Regelgröße, was sie auch sehr anfällig gegenüber Störungen macht.

Aus der WO 2005/111402 A ist ein Regelverfahren und eine Regelvorrichtung mit den Merkmalen des Oberbegriffs des Anspruchs 1 bekannt. Weiterer Stand der Technik ist in der US 2006/022657 A1, der DE 40 00663 C1, der DE 10 2005 023 453 A1 und der DE 19961798 A1 beschrieben.

Aufgabe der Erfindung ist es, ein präziseres Regelverfahren bzw. eine präzisere Regelvorrichtung bereitzustellen.

Diese Aufgabe wird durch ein Regelverfahren nach Anspruch 1 und eine Regelvorrichtung nach Anspruch 12 gelöst. Weitere vorteilhafte Ausführungsformen der Erfindung sind in den abhängigen Ansprüchen angegeben.

Gemäß der Erfindung ist ein Regelverfahren vorgesehen, bei dem eine erste Rückführgröße durch Abtasten einer Regelgröße mit einer bestimmten Abtastfrequenz ermittelt wird, wobei der Istwert der Regelgröße jeweils zu einem durch die Abtastfrequenz vorgegebenen Zeitpunkt erfasst und als erste Rückführgröße zur Verfügung gestellt wird. Eine erste Regelabweichung wird anschließend durch einen Vergleich der ersten Rückführgröße mit einer Führungsgröße ermittelt. Mithilfe eines ersten Reglers wird dann aus der ersten Regelabweichung eine erste Einzelreglerausgangsgröße gebildet. Ferner wird eine zweite Rückführgröße durch Mitteln der Regelgröße über einen Zeitraum ermittelt, wobei der Istwert der Regelgröße z. B. über den gesamten Abtastzyklus erfasst und ein Mittelwert der in diesem Zeitraum erfassten Istwerte gebildet wird, der als die zweite Rückführgröße zur Verfügung gestellt wird. Anschließend wird eine zweite Regelabweichung durch einen Vergleich der zweiten Rückführgröße mit der Führungsgröße ermittelt. Aus der so gebildeten zweiten Regelabweichung wird eine zweite Einzelreglerausgangsgröße gebildet. Schließlich wird aus der Summe der beiden Einzelreglerausgangsgrößen eine Reglerausgangsgröße gebildet, die zum Einstellen der Regelgröße verwendet wird, so dass die Regelgröße der Führungsgröße folgt. Vorteilhaft dabei ist, dass durch die Kombination der beiden Messmethoden zwei unterschiedliche Messwerte des Istwerts der Regelgröße zur Verfügung stehen, die sich hinsichtlich der Eigenschaften Genauigkeit und Schnelligkeit deutlich voneinander unterscheiden. Während die Abtastung sehr aktuelle Messwerte liefert und somit eine schnelle Regelung ohne zusätzliche Totzeit ermöglicht, ist durch die Mittelwertbildung eine Unterdrückung hochfrequenter Störungen und damit ein genauer Messwert möglich. Indem beide Messwerte als separate Rückführgrößen zwei verschiedenen Regelgliedern zur Verfügung gestellt werden, lässt sich das Regelverhalten jedes einzelnen Regelglieds und damit auch des Gesamtreglers optimieren.

In einer vorteilhaften Ausführungsform der Erfindung ist vorgesehen, dass die erste Einzelreglerausgangsgröße mithilfe eines Proportionalreglers gebildet wird. Ferner soll die zweite Einzelreglerausgangsgröße aus der zweiten Regelabweichung mithilfe eines Integralreglers gebildet werden. Durch die Verwendung eines Proportionalreglers als ersten Regler steht diesem schnellen Reglertyp die mithilfe der Abtastung gewonnene aktuelle erste Regelabweichung zur Verfügung. Hingegen steht dem zweiten Regler ein sehr genauer Wert für die Regelabweichung zur Verfügung. Bei Verwendung eines Integralreglers kann die Genauigkeit dieses Reglertyps noch weiter erhöht werden kann. Durch die Optimierung der beiden Einzelregler können die Vorteile beider Regler genutzt werden. Der kombinierte Regler weist somit die Vorteile beider Messmethoden / Reglertypen auf, wobei die Nachteile der beiden Messmethoden / Einzelregler im Wesentlichen kompensiert werden.

Eine vorteilhafte Ausführungsform der Erfindung sieht vor, dass die zweite Rückführgröße durch eine Integration des Istwerts der Regelgröße über einen Zeitraum, wie z. B. eine PWM-Schaltperiode, ermittelt wird. Die Integration erlaubt eine besonders schnelle Mittelwertbildung, die sich darüber hinaus relativ einfach realisieren lässt.

In einer weiteren vorteilhaften Ausführungsform der Erfindung wird die Regelgröße mittels einer mit einer Schaltfrequenz getakteten Stellgröße eingestellt. Dabei erfolgt das Abtasten der Regelgröße mit der doppelten Schaltfrequenz.

Ferner wird der Mittelwert der Regelgröße über einen Zeitraum gebildet, der einer durch die Schaltfrequenz der Stellgröße vorgegebenen Schaltperiode entspricht. Beide Methoden sind geeignet, solche Messfehler zu minimieren, die aufgrund der aus der Taktung der Stellgröße bei der Regelgröße resultierenden Oberschwingungen auftreten. Vorteilhaft ist es, wenn das Abtasten der Regelgröße synchron zu dem Taktsignal erfolgt, mithilfe dessen die Stellgröße getaktet wird. Hierdurch ist es besonders einfach möglich, die Abtastung zu Zeitpunkten durchzuführen, die oberschwingungsfrei sind. Dies wiederum erlaubt genauere Messungen.

Eine weitere vorteilhafte Ausführung der Erfindung sieht vor, dass die Taktung der Stellgröße mithilfe einer Pulsweitenmodulation erfolgt. Die Pulsweitenmodulation eignet sich besonders gut zum Einstellen einer Stellgröße, wie z. B. der Motorspannung. Die typischerweise für Pulsweitenmodulation verwendete feste Schaltfrequenz ermöglicht mit den oben genannten Maßnahmen eine besonders genaue Messung der Regelgröße. Da die Pulsweitenmodulation stets mit einer begrenzten Anzahl von Schaltzuständen arbeitet, kann durch den Einsatz eines Pulsweitenmodulators die Stelleinrichtung und damit das jeweilige Regelsystem besonders einfach und kostengünstig realisiert werden.

In einer weiteren vorteilhaften Ausführungsform der Erfindung ist vorgesehen, dass die Regelgröße mithilfe eines Digitalreglers geregelt wird. Dieser Reglertyp erlaubt eine sehr genaue Regelung und kann aufgrund seiner Modifizierbarkeit der jeweiligen Anwendung optimal angepasst werden. Sofern die Digitalisierung analoger Signale mithilfe eines Delta-Sigma-Modulators erfolgt, kann der Algorithmus zur Abtastung bzw. zur Integration der Regelgröße kostengünstig in handelsüblichen programmierbaren Logikbausteinen implementiert werden.

Eine vorteilhafte Ausführungsform der Erfindung sieht vor, dass als Regelgröße der Strom einer Last geregelt wird. Da die Regelgenauigkeit in vielen Stromregelanwendungen eine wesentliche Eigenschaft darstellt, kann mithilfe der Erfindung besonders einfach eine geeignete Stromregelvorrichtung realisiert werden. Das ist beispielsweise bei Stromreglern für elektrische Antriebe der Fall. Da insbesondere Servomotoren eine besonders präzise Stromregelung benötigen, lässt sich mithilfe der erfindungsgemäßen Regelvorrichtung besonders kostengünstig eine schnelle und genaue Servoregelung realisieren.

Gemäß einer weiteren vorteilhaften Ausführungsform der Erfindung umfasst eine Regelvorrichtung eine Messeinrichtung, die eine erste Rückführgröße durch Abtasten der Regelgröße ermittelt, indem der Istwert der Regelgröße jeweils zu einem durch die Abtastfrequenz bestimmten Zeitpunkt erfasst und als erste Rückführgröße bereitgestellt wird. Ferner ermittelt die Messeinrichtung eine zweite Rückführgröße durch Mitteln der Regelgröße, indem der Istwert der Regelgröße über einen Zeitraum erfasst, gemittelt und der gemittelte Istwert als zweite Rückführgröße bereitgestellt wird. Ferner weist die Regelvorrichtung eine Vergleichseinrichtung mit einem ersten und einem zweiten Vergleichsglied auf. Jedes der beiden Vergleichsglieder empfängt über einen separaten Kanal jeweils eine Rückführgröße und bildet aus ihr durch einen Vergleich mit einer Führungsgröße jeweils eine eigene Regelabweichung. Die Regelvorrichtung umfasst ferner eine Regeleinrichtung mit einem ersten und einem zweiten Regler, wobei der erste Regler aus der ersten Regelabweichung eine erste Einzelreglerausgangsgröße und der zweite Regler aus der zweiten Regelabweichung eine zweite Einzelreglerausgangsgröße bildet. Eine Summiereinrichtung der Regelvorrichtung bildet aus den beiden Einzelreglerausgangsgrößen eine gemeinsame Reglerausgangsgröße, die eine Stelleinrichtung zum Einstellen der Regelgröße verwendet.

Schließlich sieht eine weitere vorteilhafte Ausführungsform der Erfindung vor, dass die Messeinrichtung eine Integriereinrichtung umfasst, um den gemittelten Istwert durch eine Integration der Regelgröße über den Zeitraum zu bilden. Mithilfe eines Integralgliedes lässt sich die Mittelwertbildung besonders einfach realisieren.

Im Folgenden wird die Erfindung anhand von Zeichnungen näher erläutert. Es zeigen:

Fig. 1 ein Blockschaltbild eines Regelkreises zur Stromregelung einer Last mithilfe eines PI-Reglers und einer Pulsweitenmodulation,

Fig. 2 einen zeitlichen Spannungs-/Stromverlauf bei einer mithilfe der Pulsweitenmodulation realisierten Stromregelung,

Fig. 3 einen zeitlichen Spannungs-/Stromverlauf bei einer Strommessung mithilfe eines Anti-Aliasing Tiefpassfilters,

Fig. 4 einen zeitlichen Spannungs-/Stromverlauf bei einer Strommessung durch Integration über eine Periode der Schaltfrequenz,

Fig. 5 einen zeitlichen Spannungs-/Stromverlauf bei einer Strommessung durch synchrones Abtasten des Stromverlaufs zu bestimmten oberschwingungsfreien Zeitpunkten,

Fig. 6A ein Blockschaltbild eines neuen Stromreglers mit einer zweikanaligen Stromrückführung,

Fig. 6B ein Blockschaltbild eines neuen Stromreglers mit einer dreikanaligen Stromrückführung,

Fig. 7 ein Blockschaltbild einer neuen Stromregelvorrichtung für einen Servomotor,

Fig. 8 ein Blockschaltbild eines Stromreglers für einen Drehstrommotor, bei dem zwei verschiedene Stromkomponenten unabhängig voneinander erfasst und geregelt werden, und

Fig. 9 ein Blockschaltbild eines Regelsystems mit einer der Stromregelvorrichtung überlagerten Drehzahlregelvorrichtung.

Im Folgenden soll die Erfindung anhand eines Stromreglers für einen Elektromotor näher erläutert werden. Sie ist jedoch ohne weiteres auch auf andere Regler anwendbar.

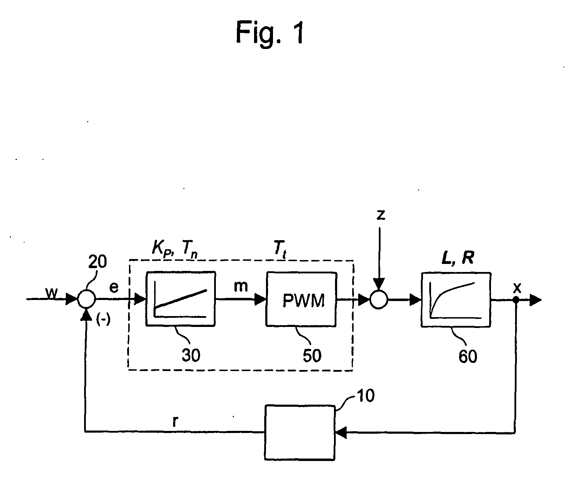

Die **Figur 1** zeigt den geschlossenen Wirkungsablauf einer typischen Stromregelvorrichtung. Dabei wird als Regelgröße x der Strom i einer Last, insbesondere einer induktiven Last, wie z. B. eines Elektromotors geregelt. Die Regelvorrichtung 1 umfasst mehrere miteinander zusammenwirkende Komponenten, die einen geschlossenen Regelkreis bilden. Als Führungsgröße w der Stromregelvorrichtung 1 dient ein Stromsollwert $x_{soll}$, der z. B. von einem übergeordneten Drehzahlregelkreis 2 bereitgestellt wird. Ein Vergleichsglied 20, das den Eingangsbereich der Regelvorrichtung 1 bildet, vergleicht den Stromsollwert $x_{soll}$ mit einem Strom-Istwert $x_{ist}$ des durch die Mötorwicklung fließenden Stroms x. Der Strom-

Istwert $x_{ist}$ wird mithilfe einer Messeinrichtung 10 erfasst und dem Vergleichsglied 20 als Rückführgröße r über einen Rückkopplungskanal bereitgestellt. Die vom Vergleichsglied 20 gebildete Regelabweichung e wird einer Regeleinrichtung 30 zur Verfügung gestellt, die aus der Regelabweichung e mithilfe ihrer Übertragungsfunktion eine Reglerausgangsgröße m bildet. Die Reglerausgangsgröße m dient zur Steuerung einer Stelleinrichtung 50. Als Stromregler 30 wird in der Regel ein PI-Regler verwendet, dessen Regelverhalten der jeweiligen Anwendung angepasst wird. Der PI-Regler 30 umfasst einen Proportionalregler (proportionales Glied mit Proportionalbeiwert $K_P$) und einen parallel dazu wirkenden Integralregler (integrales (I-)Glied mit Integrierbeiwert $K_I = Kp / T_n$ und Nachstellzeit $T_n$). Jeder der beiden Einzelregler bildet dabei aus der an seinem Eingang anliegenden Eingangsgröße e eine eigene Einzelreglerausgangsgröße. Die beiden Einzelreglerausgangsgrößen werden dann zu einer gemeinsamen Regelausgangsgröße m summiert, die einer Stelleinrichtung 50 zugeführt wird. Die Stelleinrichtung 50 umfasst im vorliegenden Fall einen Pulsweitenmodulator, um den durch die Reglerausgangsgröße m vorgegebenen Wert für die Motorspannung in ein pulsweitenmoduliertes Stellsignal umzusetzen. Das Stellsignal dient zur Ansteuerung von Leistungsschaltern eines Stellers, wodurch eine Taktung der an der Motorwicklung anliegenden Spannung erzielt wird. Der hieraus resultierende Motorstrom x wird durch die integrierende Wirkung der Motorwicklung L geglättet. Wie das Blockschaltbild der Figur 1 verdeutlicht, können verschiedene Störgrößen z auf die Regelstrecke einwirken und so die Regelgröße Strom x negativ beeinflussen.

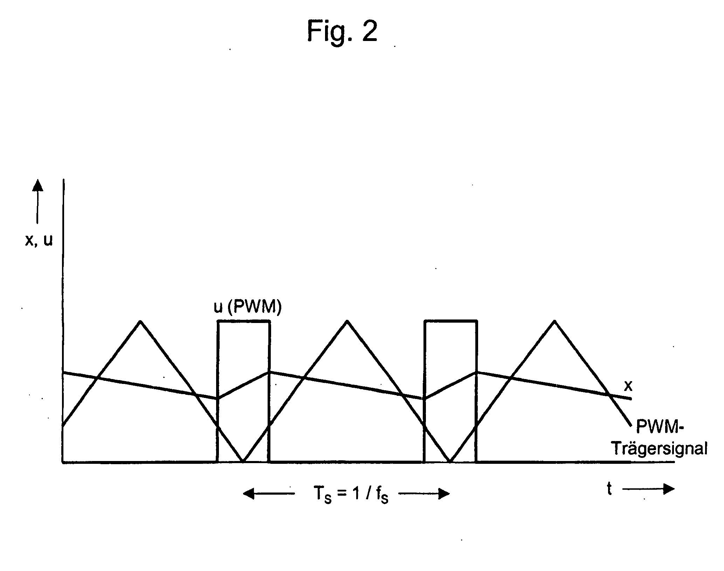

Die **Figur 2** zeigt den prinzipiellen Spannungs- und Stromverlauf eines Elektromotors bei einer Pulsweitenmodulation (PWM). Die Motor- bzw. Spulenspannung wird dabei durch die Pulsweitenmodulation in zeitdiskreter Form vorgegeben. Typisch für diese Ansteuerungsmethode ist, dass die Breite der einzelnen PWM-Pulse unmittelbar mit der zeitlichen Entwicklung der Eingangswerte des Pulsweitenmodulators korreliert ist und die Spannungsänderung im Raster eines durch eine Schaltfrequenz $f_s$ der Pulsweitenmodulation vorgegebenen Zeitintervalls $T_s$ erfolgt. Die so erzeugte Ansteuerspannung weist einen nahezu rechteckförmigen Verlauf mit nur zwei Spannungsniveaus auf. Typischerweise weist die pulsweitenmodulierte Spannung sehr steile Flanken auf, um mögliche Schaltverluste zu minimieren. Die gewünschte Grundwelle der Ansteuerspannung ergibt sich durch das schnelle Schalten zwischen den beiden Spannungszuständen. Die Pulsweitenmodulation verwendet in der Regel konstante Frequenzen, wie z. B. 4 kHz, 8 kHz oder 16 kHz. Als PWM-Trägersignal dient im vorliegenden Fall eine dreieckförmige Spannung. Aufgrund der glättenden Wirkung der Motorwicklung L folgt der Spulenstrom x der Spulenspannung nur sehr träge. Hierdurch ergibt sich ein sägezahnartiger Stromverlauf, wobei der Spulenstrom mit der Schaltfrequenz $T_s$ der Pulsweitenmodulation um den Mittelwert hin und her pendelt.

Die als Oberschwingung des Spulenstroms x wirkende Pendelbewegung des Spulenstroms kann aufgrund möglicher Aliasing-Effekte zu einer erheblichen Verfälschung der Abtastmessung führen. Eine fehlerhafte Messung resultiert letztendlich in einem insbesondere im Hinblick auf Genauigkeit schlechteren Regelverhalten des Stromregelkreises 1 und damit auch des übergeordneten Drehzahlregelkreises 2.

Um diese Abtastfehler zu vermeiden und somit das Regelverhalten des Regelkreises.zu optimieren, muss das Abtasttheorem beachtet werden. Dies lässt sich mithilfe verschiedener Messmethoden erreichen.

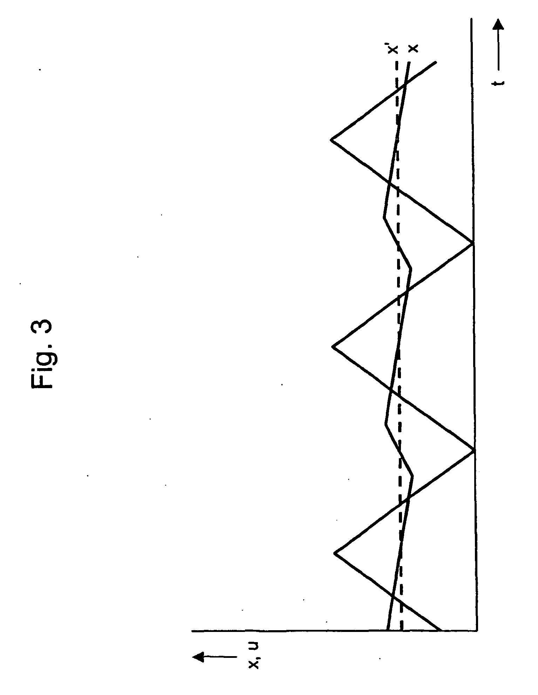

Durch die Verwendung eines geeigneten Anti-Aliasing-Tiefpassfilters können die höherfrequenten Anteile des Spulenstroms eliminiert werden. Hierdurch ergibt sich für den gefilterten Spulenstrom x' ein in der **Figur 3** gezeigter Verlauf, der im Wesentlichen dem Mittelwert des ungefilterten Spulenstroms x entspricht. Allerdings bewirkt die Verwendung eines Anti-Aliasing Tiefpass-Filters erster Ordnung eine Phasenverschiebung von bis zu 90°, durch die die Phasenreserve des Regelkreises und damit auch die maximal mögliche Kreisverstärkung deutlich verringert wird. Dies macht diese Messmethode insbesondere für die industrielle Praxis weniger geeignet.

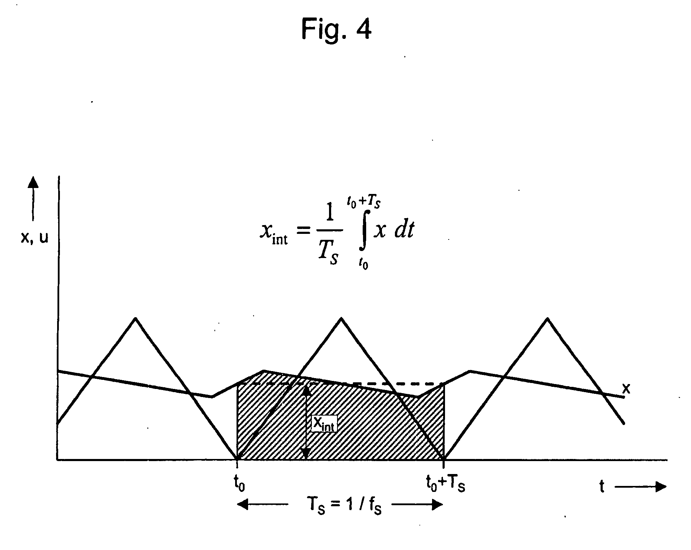

Eine weitere Messmethode zur genauen Erfassung des Istwerts $x_{ist}$ der Regelgröße Strom x stellt die Mittelwertbildung dar. Bei der z. B. auch in digitalen Multimetern verwendeten Methode wird der Messwert x über einen geeigneten Zeitraum erfasst und ein Mittelwert aus den erfassten Messwerten gebildet. Die Erfassung des Messwerts kann sowohl kontinuierlich als auch mittels schneller Abtastung erfolgen. Als geeigneter Zeitraum kommt bei der Verwendung der Pulsweitenmodulation insbesondere eine PWM-Schaltperiode $T_s$ infrage. Eine solche Mittelwertbildung über eine PWM-Schaltperiode $T_s$ ist in der **Figur 4** dargestellt. Da die zeitliche Entwicklung der Stromstärke x des Servomotors sich mithilfe einer stetigen Funktion beschreiben lässt, kann die Bestimmung des Mittelwerts des Strom-Istwerts $x_{ist}$ durch eine Integration über eine PWM-Periode $T_s$ erfolgen:

$$x_{\text{int}} = \frac{1}{T_S} \int_{t_0}^{t_0+T_S} x \, dt$$

Wie aus der Figur 4 ersichtlich, ist die durch die Integration unterhalb der Stromkurve gebildete Fläche proportional zum mittleren Strom-Istwert $x_{int}$ in der PWM-Periode $T_s$. Um den tatsächlichen mittleren Strom-Istwert $x_{int}$ in dem Zeitintervall $T_s$ zu erhalten, wird das Flächenintegral durch die Integrationszeit $T_s$ dividiert.

Es ist vorteilhaft das Integral über ein Zeitintervall zu bilden, das mit der durch das Taktsignal der Pulsweitenmodulation vorgegebenen PWM-Periode $T_s$ übereinstimmt. Die Integration muss jedoch nicht zwingend genau zwischen den durch das Taktsignal vorgegebenen Zeitpunkten $t_1$, $t_2$, $t_3$, $t_4$ erfolgen, sondern kann auch dazu zeitlich versetzt stattfinden. Wie aus der Figur 4 ersichtlich ist, heben sich durch die Integration über eine vollständige PWM-Periode die durch die Pulsweitenmodulation bedingten oberen und unteren Ausschläge des Stromsignals im Idealfall gegenseitig auf. Das hierbei ermittelte Integral gibt dann in sehr guter Näherung den jeweiligen mittleren Strom-Istwert wieder. Allerdings ist es nicht zwingend notwendig, dass die Mittelwertbildung über eine ganze PWM-Periode erfolgt. Beispielsweise kann als Integrationszeitraum auch ein längerer Zeitraum (z. B. ein Vielfaches der PWM-Periode) gewählt werden. Auch ein kürzerer Zeitraum als eine PWM-Periode ist grundsätzlich möglich. Allerdings können dann Abweichungen des ermittelten Mittelwerts vom tatsächlichen Mittelwert auftreten, da sich in diesem Fall die durch die Oberschwingung bedingten Ausschläge des Stromsignals gegenseitig nicht vollständig aufheben. Eventuelle Abweichungen vom tatsächlichen Mittelwert können jedoch gegebenenfalls mithilfe einer entsprechenden Korrektur berücksichtigt werden.

Da sich die durch die höherfrequenten Anteile bedingten Schwankungen des Messsignals bei der Mittelwertbildung typischerweise gegenseitig aufheben, ist diese Messmethode besonders unempfindlich gegenüber Störungen, die beispielsweise durch Schaltvorgänge oder durch EMV hervorgerufen werden. Daher eignet sich die grundsätzlich bei allen Pulsmodulationsverfahren anwendbare Integralmessung sehr gut für den Einsatz in der industriellen Praxis, insbesondere dann, wenn eine genaue Regelung erforderlich ist.

Allerdings muss bei der Mittelwertbildung auch eine zusätzliche Totzeit $T_t = T_s / 2 = T_A$ berücksichtigt werden. Dies stellt im Hinblick auf die Istwert-Erfassung in einem Regelkreis einen Nachteil dar, da die durch die zusätzliche Totzeit $T_t$ verursachte Phasenverschiebung $\varphi = \omega \cdot T_t$ auch hier die Phasenreserve des Regelkreises und damit die maximal mögliche Kreisverstärkung verringert.

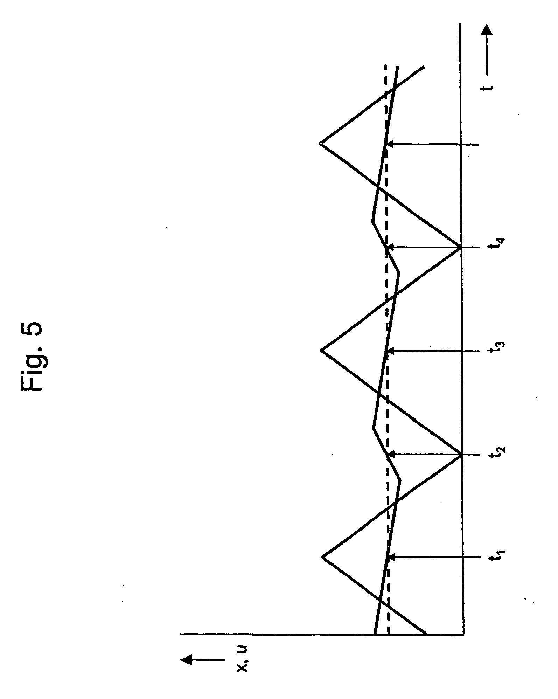

Eine besonders schnelle Möglichkeit zur Messung des Strom-Istwerts $x_{ist}$ bildet hingegen das Abtasten der Regelgröße x zu bestimmten Zeitpunkten $t_1$, $t_2$, $t_3$, $t_4$. Um zu verhindern, dass die Messung durch die höherfrequenten Anteile der Regelgröße x zu sehr verfälscht wird, werden für das Abtasten vorzugsweise solche Zeitpunkte $t_1$, $t_2$, $t_3$, $t_4$ gewählt, in denen die Regelgröße im Wesentlichen dem Mittelwert entspricht. Dies setzt allerdings voraus, dass solche oberschwingungsfreien Zeitpunkte $t_1$, $t_2$, $t_3$, $t_4$ überhaupt existieren. Darüber hinaus müssen sie auch bekannt sein. Dies ist beispielsweise bei Stromregelverfahren der Fall, die zum Ansteuern des Stroms eine (z. B. mittels Pulsmodulation) getaktete Spannung verwenden. Wie in der **Figur 5** gezeigt ist, treten aufgrund der durch die Taktung der Ansteuerspannung verursachten Oszillation des Motorstroms x in einer PWM-Schaltperiode $T_s$ in der Regel jeweils genau zwei oberschwingungsfreie Zeitpunkte $t_1$,

$t_2$, $t_3$, $t_4$ auf. Die Lage dieser Zeitpunkte innerhalb des durch die PWM-Schaltperiode $T_s$ vorgegebenen Zeitfensters kann von der jeweiligen Methode abhängen, mit der die Ansteuerspannung getaktet wird. Sofern alle Abtastzeitpunkte in einem festen zeitlichen Verhältnis zu dem PWM-Taktsignal liegen, kann die Abtastung mit einer mit dem PWM-Taktsignal korrelierten Abtastfrequenz $f_A$ = $1/T_A$ erfolgen. Bei Verwendung einer Pulsweitenmodulation zur Ansteuerung des Motorstroms x stimmen die oberschwingungsfreien Zeitpunkte im Wesentlichen mit den durch das PWM-Taktsignal vorgegebenen Zeitpunkten $t_1$, $t_2$, $t_3$, $t_4$ überein. Daher kann in einem solchen Fall die Regelgröße x synchron zum PWM-Taktsignal abgetastet werden, d.h. jeweils zu den Zeitpunkten, an denen das dreieckförmige PWM-Trägersignal einen Umkehrpunkt aufweist. Als Abtastfrequenz $f_A$ ist dabei vorzugsweise die doppelte Schaltfrequenz $f_s$ gewählt:

$$f_A = 2 \cdot f_s$$

Eine höhere Abtastrate ist in der Regel nicht sinnvoll. Hierbei müsste auch die Pulsweitenmodulation schneller schalten, was jedoch technisch in der Regel nicht erwünscht bzw. nicht möglich ist. Auch eine geringere Abtastrate macht wenig Sinn, da die Regelung in diesem Fall unnötig langsam erfolgen würde.

Die Abtastmessung der Regelgröße x stellt grundsätzlich eine sehr schnelle Messmethode dar. Sie eignet sich daher insbesondere für eine schnelle Regelung, zumal keine zusätzliche Totzeit die Bandbreite des Regelkreises begrenzt. Aus diesem Grund kommt diese Messmethode in der industriellen Praxis oft zum Einsatz. Allerdings können hochfrequente Störungen oder ungenaues Abtasten das Messergebnis stark beeinflussen. Ferner benötigt diese Methode ein geeignetes PWM-Verfahren oder ein anderes geeignetes Pulsmodulationsverfahren für den Motorstrom, bei dem oberschwingungsfreie Zeitpunkte bekannt sind oder zumindest abgeschätzt werden können.

Im Folgenden soll gezeigt werden, wie durch eine Kombination verschiedener Messverfahren sowie die zwei- bzw. mehrkanalige Rückführung der dabei gebildeten Rückführgrößen eine Regelung realisiert werden kann, die die Vorteile der verwendeten Messmethoden ohne ihre Nachteile miteinander kombiniert. Hierzu wird der kombinierte Regler in seine Einzelregler aufgeteilt, die zwar jeweils eine eigene Regelabweichung als Eingangsgröße erhalten, aber eine gemeinsame Reglerausgangsgröße bilden.

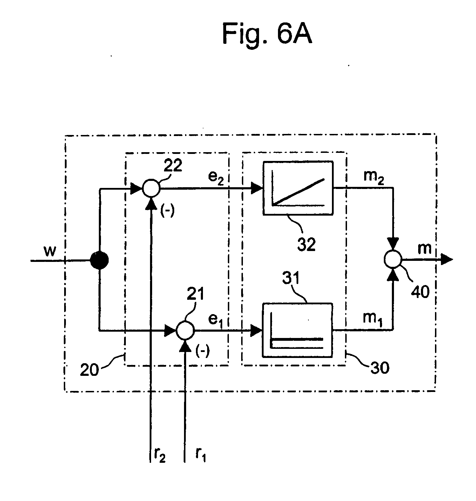

Die **Figur 6A** zeigt ein Blockschaltbild eines Teilbereichs des erfindungsgemäßen Stromregelkreises 1 mit einer zwei Vergleichsglieder 21, 22 umfassenden Vergleichseinrichtung 20, einer vorzugsweise einen PI-Regler umfassenden Regeleinrichtung 30 und einer Summiereinrichtung 40. Der PI-Regler ist dabei in ein P-Regelglied 31 und ein parallel geschaltetes I-Regelglied 32 aufgeteilt, wobei dem P-Regelglied 31 ein erstes Vergleichsglied 21 und dem I-Regelglied 32 ein zweites Vergleichsglied 22 zugeordnet ist. Jedes der beiden Vergleichsglieder 21, 22 verfügt über einen eigenen Rückführkanal, über den das entsprechende Vergleichsglied 21, 22 eine Rückführgröße $r_1$, $r_2$ von einer Messeinrichtung 10 empfängt. Als Rückführgrößen $r_1$, $r_2$ dienen zwei verschiedene Strom-Istwerte, die mit verschiedenen Messverfahren ermittelt wurden. Zur Erfassung des Strom-Istwerts kann grundsätzlich jede geeignete Messmethode verwendet werden. Neben einer direkten Messung des Ansteuerstroms kann dieser auch alternativ aus bestimmten Betriebsgrößen abgeleitet werden. Die beiden Messverfahren werden vorzugsweise so gewählt, dass die damit ermittelten Istwerte für den jeweiligen Reglertyp optimiert sind. Jedes der beiden Vergleichsglieder 21, 22 vergleicht die ihm zugeordnete Rückführgröße $r_1$, $r_2$ mit der an einem gemeinsamen Eingang anliegenden Führungsgröße w und gibt als Ergebnis dieses Vergleichs eine Regelabweichung $e_1$, $e_2$ an das ihm jeweils zugeordnete Regelglied 31, 32 aus. Die beiden Regelglieder 31, 32 bilden mithilfe ihrer jeweiligen Übertragungsfunktion aus den ihnen zugeführten Regelabweichungen $e_1$, $e_2$ jeweils eine Einzelreglerausgangsgröße $m_1$, $m_2$. Die Einzelreglerausgangsgrößen $m_1$, $m_2$ werden anschließend an eine gemeinsame Summiereinrichtung 40 weitergereicht, die daraus eine Reglerausgangsgröße m bildet. In der Regel wird die Reglerausgangsgröße m dabei durch eine einfache Addition der beiden Einzelreglerausgangsgrößen $m_1$, $m_2$ gebildet. Allerdings können auch beliebige Operationen, wie z. B. eine Gewichtung der Einzelreglerausgangsgrößen $m_1$, $m_2$ mit verschiedenen Faktoren vorgenommen werden, um die kombinierte Reglerausgangsgröße m aus beiden Einzelreglerausgangsgrößen $m_1$, $m_2$ zu bilden. Die kombinierte Reglerausgangsgröße m der Regeleinrichtung 30 dient dann einer Stelleinrichtung 50 als Eingangsgröße, um die Regelgröße x einzustellen.

Die in der Figur 6A gezeigte Regeleinrichtung 30 kann grundsätzlich auch weitere Regelglieder umfassen. Beispielsweise lässt sich ein drittes Regelglied 33 (z. B. ein differentiales (D-)Glied mit Differenzierbeiwert $K_D$ bzw. Vorhaltzeit $T_v$) parallel zu den beiden Regelgliedern 31, 32 vorsehen. Das zusätzliche Regelglied 33 kann dabei eine der bereits vorliegenden Regelabweichungen $e_1$, $e_2$ als Eingangsgröße verwenden. Ferner ist es auch möglich, für das zusätzliche Regelglied 33 eine eigene Eingangsgröße bereitzustellen. Dies kann beispielsweise mithilfe eines zusätzlichen Vergleichsglieds 23 erfolgen, das eine dritte Rückführgröße $r_3$ mit der Führungsgröße w vergleicht. Als weitere Rückführgröße $r_3$ kann dabei ein mithilfe eines dritten Messverfahrens ermittelter Strom-Istwert dienen. Die Ausgangsgröße des dritten Regelglieds 33 kann als eine dritte Einzelreglerausgangsgröße $m_3$ der gemeinsamen Summiereinrichtung 40 zugeführt werden, die die Reglerausgangsgröße m aus allen drei Einzelreglerausgangsgrö-

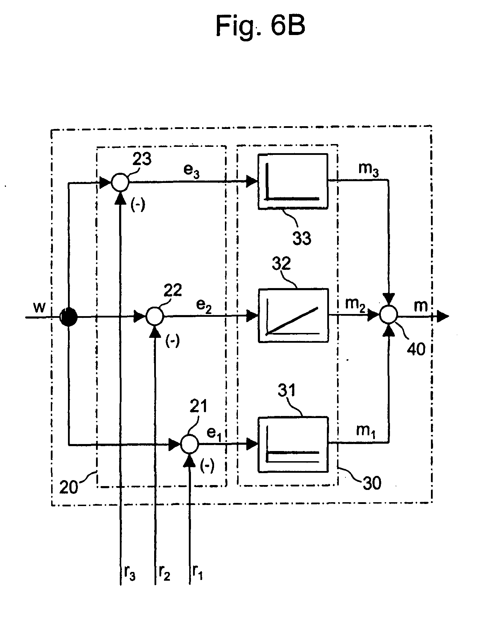

ßen $m_1$, $m_2$, $m_3$ bildet. Eine solche Regeleinrichtung 30 ist in der **Figur 6B** gezeigt.

Die dritte Rückführgröße $r_3$ kann auch identisch Null gewählt werden. In diesem Fall wird durch das Regelglied 33 nur die Führungsgröße w differenziert. Hierdurch ergibt sich ein vorteilhafter Sonderfall der in der Figur 6B gezeigten Ausführungsform. Hierbei kann der Regelkreis 1 besonders schnell auf Änderungen der Führungsgröße w reagieren.

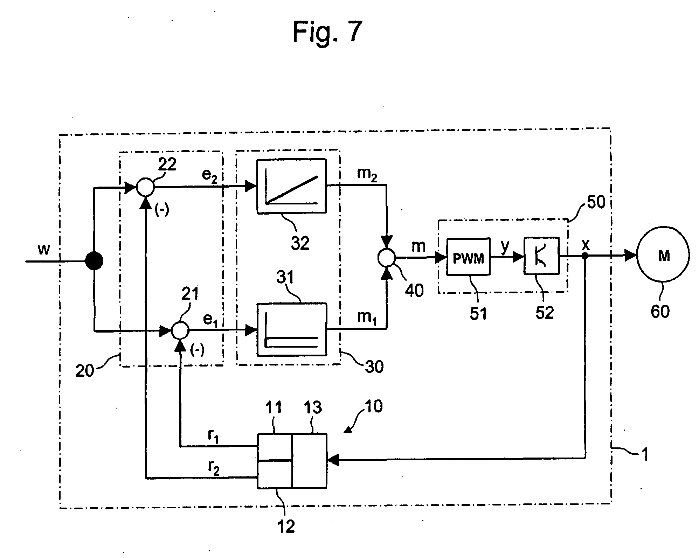

Die **Figur 7** zeigt ein Blockschaltbild einer erfindungsgemäßen Regelvorrichtung 1 mit der Regeleinrichtung 30 aus Figur 6A, die eine zweikanalige Rückführung aufweist. Die vorzugsweise zum Regeln des Stroms eines Elektromotors ausgebildete Regelvorrichtung 1 umfasst ferner eine Messeinrichtung 10, mit deren Hilfe der Istwert der Regelgröße Motorstrom erfasst wird. Hierzu greift die Messeinrichtung 10 den Strom x des Elektromotors 60 an einer geeigneten Stelle der Regelstrecke ab. Die Messeinrichtung 10 ist dabei ausgebildet, den Strom-Istwert $x_{ist}$ mithilfe von zwei verschiedenen Messmethoden zu erfassen und die Messergebnisse der beiden Messungen jeweils als eine Rückführgröße $r_1$, $r_2$ über die beiden separaten Rückführkanäle an die Vergleichseinrichtung 20 weiterzureichen. Hierzu umfasst die Messeinrichtung 10 zwei Untereinheiten, die hier schematisch als eine Abtasteinrichtung 11 und eine Integriereinrichtung 12 ausgebildet sind. Die Abtasteinrichtung 11 ermittelt die erste Rückführgröße $r_1$ durch Abtasten der Regelgröße x mit einer vorgegebenen Abtastfrequenz $f_A$. Die Abtastung erfolgt dabei vorzugsweise synchron zu der Pulsweitenmodulation, mit deren Hilfe die Ansteuerspannung einer Leistungsendstufe 52 für den Motorstrom x gebildet wird. Dabei wird als Abtastfrequenz $f_A$ vorzugsweise die doppelte PWM-Schaltfrequenz $f_s$ gewählt. Hingegen ermittelt die Integriereinrichtung 12 die zweite Rückführgröße $r_2$ durch eine Mittelwertbildung der Regelgröße x. Vorzugsweise erfolgt dies durch eine Integration der Regelgröße x über einen PWM-Zyklus $T_s$.

Die Algorithmen zur Abtastung und Integration der Regelgröße x können sowohl als zwei strukturell voneinander getrennte Einrichtungen 11, 12 als auch als eine gemeinsame Einrichtung der Messeinrichtung 10 realisiert werden. Bei einem Digitalregler 1 müssen ferner alle analog vorliegenden Signale, wie z. B. die Regelgröße x, digitalisiert werden, bevor sie weiter verarbeitet werden können. Hierzu umfasst die Messeinrichtung 10 einen geeigneten Digitalisierer 13. Vorzugsweise erfolgt die Digitalisierung der analogen Signale mithilfe von Sigma-Delta $(\Sigma\Delta)$ Modulatoren. In diesem Fall kann der Algorithmus zur Abtastung bzw. zur Integration der Messgröße x auch kostengünstig in handelsüblichen programmierbaren Halbleiterbausteinen, wie z. B. FPGAs (field programmable gate array), implementiert werden.

Wie bereits weiter oben beschrieben, bildet die Vergleichseinrichtung 20 aus den beiden Rückführgrößen $r_1$, $r_2$ zwei voneinander unabhängige Regelabweichungen $e_1$, $e_2$, aus denen die beiden Regelglieder 31, 32 der Regeleinrichtung 30 die beiden Einzelreglerausgangsgrößen $m_1$, $m_2$ erzeugen. Durch die Kombination der Einzelreglerausgangsgrößen $m_1$, $m_2$ mithilfe der Summiereinrichtung 40 steht am Eingang der Stelleinrichtung 50 die Reglerausgangsgröße m zur Verfügung. Die Stelleinrichtung 50 umfasst dabei ein Stellglied 51 und einen Steller 52. Das Stellglied 51 setzt den durch die Reglerausgangsgröße m vorgegebenen Wert in eine Stellgröße y für den Steller 52 um. Im vorliegenden Fall wird die digital vorliegende Reglerausgangsgröße m mithilfe eines Pulsweitenmodulators 51 in ein pulsweitenmoduliertes Spannungssignal y umgesetzt, mit dem der Steller 52 angesteuert wird. Der typische Steller 52 umfasst Leistungsschalter, die nur in zwei Kennpunkten (sperrend oder durchgeschaltet) betrieben werden. Anhand der pulsweitenmodulierten Stellgröße y führt der Steller 52 eine Taktung des Motorstroms x durch.

Die in der Figur 7 gezeigte Regelvorrichtung regelt unmittelbar den durch die Wicklungen des angeschlossenen Elektromotors 60 fließenden Strom. Bei einer mehrphasigen Maschine setzt sich der Motorstrom aus mehreren, jeweils durch verschiedene Wicklungen des Motors fließende Stromkomponenten zusammen. Im Falle eines Drehstrommotors wird ein Drehstrom oder Dreiphasenwechselstrom verwendet, dessen drei in einem vorgegebenen Phasen- und Amplitudenverhältnis zueinander stehende Stromkomponenten $i_a$, $i_b$, $i_c$ jeweils separat eingestellt werden. Da sich alle drei Drehstromkomponenten $i_a$, $i_b$, $i_c$ in jeder Phase zu Null summieren, kann jede Stromkomponente aus den beiden anderen Stromkomponenten ermittelt werden. Daher genügt es, wenn nur zwei $i_a$, $i_b$ der drei Stromkomponenten $i_a$, $i_b$, $i_c$ gemessen und geregelt werden. Dies erlaubt eine vereinfachte Drehstromregelung mit nur zwei voneinander unabhängigen Regelkreisen.

Eine weitere Optimierung der Regelung kann durch Verwendung eines geeigneten Koordinatensystems erfolgen. Je nach Anwendung (Synchron-, Asynchronmotor, etc.) kommt hierbei ein Ständer- oder ein Feld- oder ein Läuferkoordinatensystem infrage. Zum Beispiel können die in dem ursprünglichen ortsfesten Ständerkoordinatensystem vorliegenden Stromkomponenten $i_a$ und $i_b$ durch eine einfache Transformation als entsprechende Stromkomponenten $i_\alpha$ und $i_\beta$ eines orthogonalen $\alpha/\beta$-Koordinatensystems dargestellt werden. Mithilfe eines Koordinatendrehers ist die Regelung auch in einem feldorientierten d/q-Koordinatensystem möglich, bei dem die beiden Stromkomponenten $i_{id}$, iq als zwei einfach zu regelnde Gleichströme ausgebildet sind. Da die flussbildende Stromkomponente $i_d$ keinen Beitrag zur Drehmomentbildung liefert, kann die Eingangsgröße des entsprechenden Regelkreises identisch Null vorgegeben werden, um die Maschine verlustoptimal zu betreiben. In diesem Fall liegt der Stellwert eines überlagerten Drehzahlreglers w nur am Eingang des für die momentbildende Stromkomponente $i_d$ zuständigen Regelkreises an.

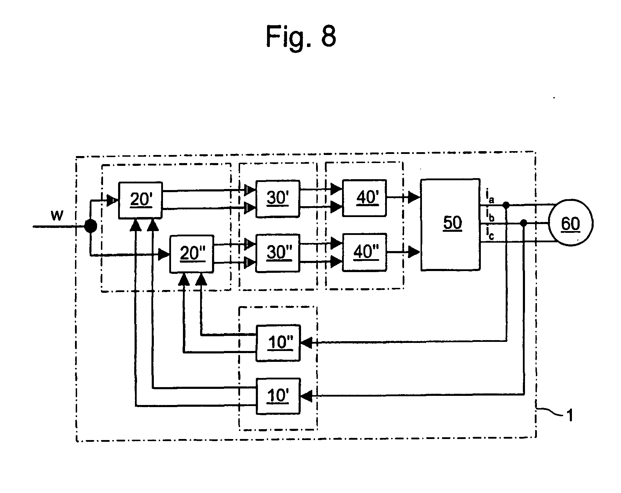

Die Figur 8 zeigt eine entsprechende Stromregelvorrichtung 1 für einen Drehstrommotor 60. Die Regelvorrichtung 1 umfasst im vorliegenden Beispiel zwei voneinander unabhängige Regelkreise für die beiden Stromkomponenten $i_\alpha$ und $i_\beta$ des rechtwinkligen Ständerkoordinatensystems. Jeder Stromkomponente $i_\alpha$ und $i_\beta$ ist dabei eine eigene Messeinrichtung 10', 10" und eine eigene Regeleinrichtung 30', 30" zugeordnet. Jede der beiden Messeinrichtungen 10', 10" erfasst die ihr zugeordnete Stromkomponente $i_a$, $i_b$ vorzugsweise mithilfe verschiedener Messmethoden, wie z. B. einer Abtast- und einer Mittelwertmessung. Die dabei ermittelten Strom-Istwerte $i_{ist}$ werden jeweils einer Vergleichseinrichtung 20', 20" zugeführt. In der Figur 8 sind hierfür beispielsweise zwei Rückführkanäle pro Messeinrichtung 10', 10" vorgesehen. Anhand der Ausgangsgrößen einer Vergleichseinrichtung 20', 20" bilden in der zugehörigen Regeleinrichtung 30', 30" mehrere Einzelregler eine entsprechende Anzahl von Einzelreglerausgangsgrößen, die anschließend durch eine Summiereinrichtung 40', 40" zu einer Reglerausgangsgröße des jeweiligen Regelkreises zusammengefasst werden. Mithilfe der Reglerausgangsgrößen der beiden Regelkreise wird schließlich eine Stelleinrichtung 50 angesteuert, die die einzelnen Drehspannungskomponenten $u_a$, $u_b$, $u_c$ einstellt. Dabei müssen die im vorliegenden Beispiel im rechtwinkligen $\alpha/\beta$-Ständerkoordinatensystem vorliegenden Reglerausgangsgrößen so umgesetzt werden, dass die Stelleinrichtung 50 die drei Drehspannungskomponenten $u_a$, $u_b$, $u_c$ einstellt. Um die Genauigkeit der Regelung zu erhöhen, können auch alle drei Stromkomponenten $i_a$, $i_b$, $i_c$ des Drehstroms direkt gemessen werden. In diesem Fall umfasst die Regelvorrichtung 1 vorzugsweise drei Messeinrichtungen, jeweils eine für jede Phase (hier nicht gezeigt). Die Regelung kann auch in diesem Fall in einem zweiachsigen Koordinatensystem erfolgen.

Bei rotierenden Maschinen wird häufig eine Regelung benötigt, mit deren Hilfe die Drehzahl auf einem vorgegebenen Wert gehalten werden kann. Eine solche Drehzahlregelung kann z. B. mithilfe einer so genannten Kaskadenregelung realisiert werden, bei der ein Stromregelkreis einem Drehzahlregelkreis unterlagert ist. Hierbei wird zunächst die Hilfsgröße Motorstrom mit einem schnellen inneren Regelkreis geregelt, dessen Führungsgröße durch die Stellgröße des äußeren, langsameren Regelkreises (Drehzahlregelkreis) gebildet wird. Die Ineinanderverschachtelung der beiden Regelkreise untergliedert die Gesamtregelstrecke in kleinere Teilstrecken, die übersichtlicher sind und besser geregelt werden können als die Gesamtregelstrecke. Hierdurch kann oft eine höhere Regelgenauigkeit erreicht werden.

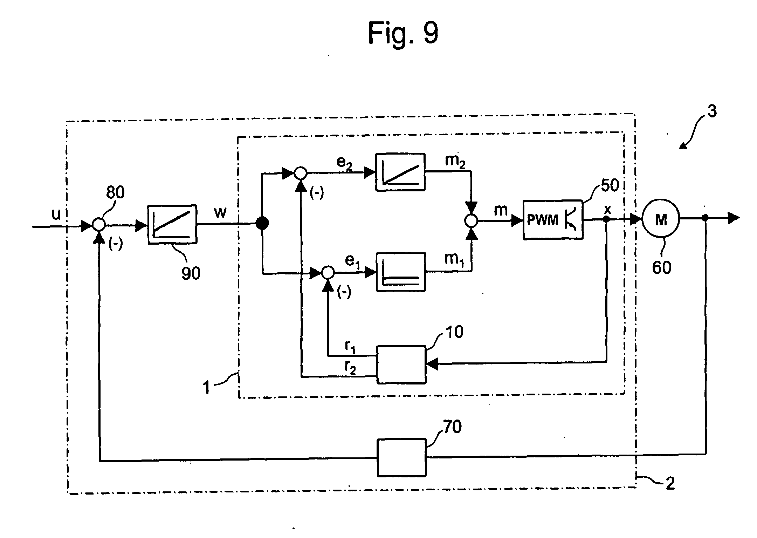

Die **Figur 9** zeigt ein Blockschaltbild eines solchen Drehzahlregelsystems 3 für einen Servomotor mit der in der Figur 7 gezeigten erfindungsgemäßen Stromregelvorrichtung 1 und einer überlagerten Drehzahlregelvorrichtung 2. Während der innere Stromregelkreis 1 mithilfe seiner Messeinrichtung 10 als Regelgröße x den Motorstrom erfasst, greift der übergeordnete Drehzahlregelkreis 2 mithilfe einer entsprechenden Messeinrichtung 70 die Drehzahl des Elektromotors 60 im Antriebsstrang ab. Aus einem Vergleich des mithilfe der Messrichtung 70 ermittelten Drehzahl-Istwerts mit einem durch eine Führungsgröße u vorgegebenen Drehzahl-Sollwert generiert eine Vergleichseinrichtung 80 des Drehzahlreglers 2 eine Drehzahl-Regelabweichung. Ein PI-Regler 90 des Drehzahlregelkreises bildet anhand dieser Regelabweichung eine entsprechende Reglerausgangsgröße, die dem Stromregelkreis 1 schließlich als Führungsgröße w bereitgestellt wird. Sofern zusätzlich eine Vorsteuerung vorgesehen ist, kann die Führungsgröße w des Stromregelkreises 1 auch durch eine Kombination der Reglerausgangsgröße des Drehzahlregelkreises 2 mit einer Vorsteuerungsgröße gebildet werden.

Der in der Figur 9 gezeigte Drehzahlregelkreis 2 kann ebenfalls als ein innerer Regelkreis einer übergeordneten Regelvorrichtung ausgebildet sein. Insbesondere lagegeregelte Antriebe, wie z. B. Servoantriebe, besitzen noch einen dem Drehzahlregler 3 übergeordneten Lageregelkreis (hier nicht dargestellt), wobei die Ausgangsgröße des Lagereglers die Führungsgröße u des Drehzahlreglers 3 bildet.

## Patentansprüche

1. Regelverfahren umfassend die Schritte:

   - Ermitteln einer ersten Rückführgröße ($r_1$),
   - Ermitteln einer ersten Regelabweichung ($e_1$) durch einen Vergleich der ersten Rückführgröße ($r_1$) mit einer Führungsgröße (w),
   - Bilden einer ersten Einzelreglerausgangsgröße ($m_1$) aus der ersten Regelabweichung ($e_1$) mithilfe eines ersten Reglers (31),
   - Ermitteln einer zweiten Rückführgröße ($r_2$),
   - Ermitteln einer zweiten Regelabweichung ($e_2$) durch einen Vergleich der zweiten Rückführgröße ($r_2$) mit der Führungsgröße (w),
   - Bilden einer zweiten Einzelreglerausgangsgröße ($m_2$) aus der zweiten Regelabweichung ($e_2$) mithilfe eines zweiten Reglers (32),
   - Bilden einer Reglerausgangsgröße (m) aus den beiden Einzelreglerausgangsgrößen ($m_1$, $m_2$), und
   - Verwenden der Reglerausgangsgröße (m) zum Einstellen der Regelgröße (x), so dass die Regelgröße (x) der Führungsgröße (w) folgt,

   **dadurch gekennzeichnet, dass**
   die erste Rückführgröße ($r_1$) durch Abtasten einer Regelgröße (x) mit einer Abtastfrequenz ($f_A$), wobei der Istwert ($x_{ist}$) der Regelgröße (x) jeweils zu einem durch die Abtastfrequenz ($f_A$) bestimmten Zeitpunkt ($t_1$, $t_2$, $t_3$, $t_4$) erfasst wird, und die zweite Rückführgröße ($r_2$) durch Mitteln der Regelgröße (x), wobei

der Istwert ($x_{ist}$) der Regelgröße (x) über einen Zeitraum ($T_s$) erfasst und ein Mittelwert ($x_{int}$) daraus gebildet wird, ermittelt werden.

2. Regelverfahren nach Anspruch 1, **dadurch gekennzeichnet, dass** die Reglerausgangsgröße (m) durch Summieren der beiden Einzelreglerausgangsgrößen ($m_1$, $m_2$) gebildet wird.

3. Regelverfahren nach Anspruch 1 oder 2, **dadurch gekennzeichnet, dass** die zweite Rückführgröße ($r_2$) durch eine Integration des Istwerts ($x_{ist}$) der Regelgröße (x) über den Zeitraum ($T_s$) ermittelt wird.

4. Regelverfahren nach einem der vorhergehenden Ansprüche, **dadurch gekennzeichnet, dass** zum Einstellen der Regelgröße (x) eine mit einer Schaltfrequenz ($f_s$) getaktete Stellgröße (y) aus der Reglerausgangsgröße (m) gebildet wird, wobei das Abtasten der Regelgröße (x) mit der doppelten Schaltfrequenz ($f_s$) erfolgt und/oder der Mittelwert ($x_{int}$) der Regelgröße (x) über einen Zeitraum gebildet wird, der einer durch die Schaltfrequenz ($f_s$) der Stellgröße (y) vorgegebenen Schaltperiode ($T_s$) oder einem ganzzahligen Vielfachen dieser Schaltperiode ($T_s$) entspricht.

5. Regelverfahren nach Anspruch 4, **dadurch gekennzeichnet, dass** das Abtasten der Regelgröße (x) synchron zu einem Taktsignal erfolgt, mit dessen Hilfe die Stellgröße (y) getaktet wird.

6. Regelverfahren nach einem der vorhergehenden Ansprüche, **dadurch gekennzeichnet, dass** das Abtasten jeweils zu einem oberschwingungsfreien Zeitpunkt der Regelgröße (x) erfolgt.

7. Regelvorrichtung umfassend:

   - eine Messeinrichtung (10), die ausgebildet ist, eine erste Rückführgröße ($r_1$) und eine zweite Rückführgröße ($r_2$) zu ermitteln,
   - eine Vergleichseinrichtung (20) mit einem ersten und einem zweiten Vergleichsglied (21, 22), wobei das erste Vergleichsglied (21) ausgebildet ist, eine erste Regelabweichung ($e_1$) durch einen Vergleich der ersten Rückführgröße ($r_1$) mit einer Führungsgröße (w) zu bilden, und wobei das zweite Vergleichsglied (22) ausgebildet ist, eine zweite Regelabweichung ($e_2$) durch einen Vergleich der zweiten Rückführgröße ($r_2$) mit der Führungsgröße (w) zu bilden,
   - eine Regeleinrichtung (30) mit einem ersten und einem zweiten Regler (31, 32), wobei der erste Regler (31) ausgebildet ist, eine erste Einzelreglerausgangsgröße ($m_1$) aus der ersten Regelabweichung ($e_1$) zu bilden, und wobei der zweite Regler (32) ausgebildet ist, eine zweite

Einzelreglerausgangsgröße ($m_2$) aus der zweiten Regelabweichung ($e_2$) zu bilden,
   - eine Summiereinrichtung (40), die ausgebildet ist, eine Reglerausgangsgröße (m) aus den beiden Einzelreglerausgangsgrößen ($m_1$, $m_2$) zu bilden, und
   - eine Stelleinrichtung (50), die ausgebildet ist, die Regelgröße (x) mithilfe der Reglerausgangsgröße (m) so einzustellen, dass die Regelgröße (x) der Führungsgröße (w) folgt,

   **dadurch gekennzeichnet, dass**
   die eine Messeinrichtung (10) ausgebildet ist, die erste Rückführgröße ($r_1$) durch Abtasten einer Regelgröße (x) mit einer Abtastfrequenz ($f_A$), indem der Istwert ($x_{ist}$) der Regelgröße (x) jeweils zu einem durch die Abtastfrequenz ($f_A$) bestimmten Zeitpunkt ($t_1$, $t_2$, $t_3$, $t_4$) erfasst wird, und die zweite Rückführgröße ($r_2$) durch Mitteln der Regelgröße (x), indem der Istwert ($x_{ist}$) der Regelgröße (x) über einen Zeitraum ($T_s$) erfasst und ein Mittelwert ($x_{int}$) daraus gebildet wird, zu ermitteln.

8. Regelvorrichtung nach Anspruch 7, **dadurch gekennzeichnet, dass** der erste Regler (31) ein Proportionalregler und/oder der zweite Regler (32) ein Integralregler ist.

9. Regelvorrichtung nach Anspruch 7 oder 8, **dadurch gekennzeichnet, dass** die Messeinrichtung (10) eine Integriereinrichtung (12) umfasst, um den gemittelten Istwert ($x_{ist}$) durch eine Integration der Regelgröße (x) über den Zeitraum ($T_s$) zu bilden.

10. Regelvorrichtung nach einem der vorhergehenden Ansprüche, **dadurch gekennzeichnet, dass** die Stelleinrichtung (50) einen Pulsweitenmodulator (51) aufweist, um die Stellgröße (y) zu takten.

11. Regelvorrichtung nach einem der vorhergehenden Ansprüche, **dadurch gekennzeichnet, dass** die Regeleinrichtung (30) als ein digitaler Regler ausgebildet ist.

12. Regelvorrichtung nach Anspruch 11, **dadurch gekennzeichnet, dass** die Messeinrichtung (10) zum Digitalisieren analoger Signale einen Delta-Sigma-Modulator (13) aufweist, und die Integriereinrichtung (12) und/oder eine Abtasteinrichtung (11) der Messeinrichtung (10) als Algorithmen in einem programmierbaren Halbleiterbaustein implementiert sind.

13. Regelvorrichtung nach einem der vorhergehenden Ansprüche, **dadurch gekennzeichnet, dass** die Regelvorrichtung (1) als Stromregler einer Last (60) ausgebildet ist und Teil eines übergeordneten Drehzahlregelkreises (2) ist, dessen Stellgröße allein oder in Kombination mit einer Vorsteuergröße die Führungsgröße (w) der Regelvorrichtung (1) bildet.

14. Regelvorrichtung nach Anspruch 13, **dadurch gekennzeichnet, dass** die Regelvorrichtung (1) ausgebildet ist, den Strom eines Drehstrommotors (60) in einem ständerfesten Koordinatensystem zu regeln, wobei abhängig vom verwendeten Ständerkoordinatensystem zwei oder drei Messeinrichtungen (10', 10") und zwei oder drei Regeleinrichtungen (20', 20") vorgesehen sind, um einzelne Stromkomponenten ($i_a$, $i_b$, $i_c$, $i_\alpha$, $i_\beta$) des jeweiligen Ständerkoordinatensystems unabhängig voneinander zu erfassen und zu regeln.

15. Regelvorrichtung nach Anspruch 13, **dadurch gekennzeichnet, dass** die Regelvorrichtung (1) ausgebildet ist, den Strom eines Drehstrommotors (60) in einem feldorientierten Koordinatensystem zu regeln, wobei für jede Stromkomponente ($i_q$, $i_d$) des feldorientierten Koordinatensystems eine eigene Regeleinrichtung (20',20") vorgesehen ist, und wobei zwei oder drei Messeinrichtungen (10', 10") vorgesehen sind, um die beiden Stromkomponenten ($i_q$, $i_d$) des feldorientierten Koordinatensystem bzw. alle drei Stromkomponenten ($i_a$, $i_b$, $i_c$) des Drehstrommotors (60) unabhängig voneinander zu erfassen.

**Claims**

1. A method of closed-loop controlling, comprising the steps of:

   - determining a first feedback variable ($r_1$),
   - determining a first control deviation ($e_1$) by comparing the first feedback variable ($r_1$) to a command variable (w),
   - generating a first individual controller output variable ($m_1$) from the first control deviation ($e_1$) by means of a first controller (31),
   - determining a second feedback variable ($r_2$),
   - determining a second control deviation ($e_2$) by comparing the second feedback variable ($r_2$) to the command variable (w),
   - generating a second individual controller output variable ($m_2$) from the second control deviation ($e_2$) by means of a second controller (32),
   - generating a controller output variable (m) from the two individual controller output variables ($m_1$, $m_2$), and
   - using the controller output variable (m) for setting the control variable (x) so that the control variable (x) follows the command variable (w),

   **characterized in that**
   the first feedback variable ($r_1$) is determined by sampling a control variable (x) at a sampling rate ($f_A$), the actual value ($x_{ist}$) of the control variable (x) being registered, respectively, at a point in time ($t_1$, $t_2$, $t_3$, $t_4$) which is determined by the sampling rate ($f_A$), and the second feedback variable ($r_2$) is determined by averaging the control variable (x), the actual value ($x_{ist}$) of the control variable (x) being registered over a time period ($T_s$) and an average value ($x_{int}$) being generated therefrom.

2. The method of closed-loop controlling according to claim 1, **characterized in that** the controller output variable (m) is generated by summing up the two individual controller output variables ($m_1$, $m_2$).

3. The method of closed-loop controlling according to claim 1 or 2, **characterized in that** the second feedback variable ($r_2$) is determined by an integration of the actual value ($x_{ist}$) of the control variable (x) over a period of time ($T_s$).

4. The method of closed-loop controlling according to any one of the preceding claims, **characterized in that** a manipulated variable (y) clocked with a switching frequency ($f_s$) is generated from the controller output variable (m) for setting the control variable (x), wherein sampling the control variable (x) is carried out at the double switching frequency ($f_s$) and/or the average value ($x_{int}$) of the control variable (x) is generated over a time period which corresponds to a switching period ($T_s$) predetermined by the switching frequency ($f_s$) of the manipulated variable (y) and an integer multiple of this switching period ($T_s$).

5. The method of closed-loop controlling according to claim 4, **characterized in that** the sampling of the control variable (x) takes place synchronously with a clock signal by means of which the manipulated variable (y) is clocked.

6. The method of closed-loop controlling according to any one of the preceding claims, **characterized in that** in each case the sampling takes place at a harmonic-free point in time of the control variable (x).

7. A closed-loop controller, comprising:

   - a measuring device (10) being configured to determine a first feedback variable ($r_1$) and a second feedback variable ($r_2$),
   - a comparing device (20) having a first and a second comparing element (21, 22), wherein the first comparing element (21) is configured to generate a first control deviation ($e_1$) by means of a comparison of the first feedback variable ($r_1$) with a command variable (w), and wherein the second comparing element (22) is configured to generate a second control deviation ($e_2$) by means of a comparison of the second feedback variable ($r_2$) with the command variable (w),

- a closed-loop controller (30) having a first and a second controller (31, 32), wherein the first controller (31) is configured to generate a first individual controller output variable ($m_1$) from the first control deviation ($e_1$), and wherein the second controller (32) is configured to generate a second individual controller output variable ($m_2$) from the second control deviation ($e_2$),

- a summation device (40) being configured to generate a controller output variable (m) from the two individual controller output variables ($m_1$, $m_2$), and

- an actuator unit (50) being configured to set the control variable (x) by means of the controller output variable (m) in such a way that the control variable (x) follows the command variable (w), **characterized in that**

- the measuring device (10) is configured to determine the first feedback variable ($r_1$) by sampling a control variable (x) at a sampling rate ($f_A$), the actual value ($x_{ist}$) of the control variable (x) being registered, respectively, at a point in time ($t_1$, $t_2$, $t_3$, $t_4$) which is determined by the sampling rate ($f_A$), and the second feedback variable ($r_2$) by averaging the control variable (x) the actual value ($x_{ist}$) of the control variable (x) being registered over a time period ($T_s$) and an average value ($x_{int}$) being generated therefrom.

8. The closed-loop controller according to claim 7, **characterized in that** the first controller (31) is a proportional controller and/or the second controller (32) is an integral controller.

9. The closed-loop controller according to claim 7 or 8, **characterized in that** the measuring device (10) comprises an integrating device (12) for generating the averaged actual value ($x_{ist}$) by integrating the control variable (x) over said period of time ($T_s$).

10. The closed-loop controller according to any one of the preceding claims, **characterized in that** the actuator unit (50) comprises a pulse-width modulator (51) in order to clock the manipulated variable (y).

11. The closed-loop controller according to any one of the preceding claims, **characterized in that** the control device (30) is configured as a digital controller.

12. The closed-loop controller according to claim 11, **characterized in that** the measuring device (10) comprises a delta-sigma-modulator (13) for digitizing analogue signals, and the integrating device (12) and/or a sampling device (11) of the measuring device (10) are implemented in a programmable semiconductor device as algorithms.

13. The closed-loop controller according to any one of the preceding claims, **characterized in that** the closed-loop controller (1) is configured as the control loop of a load (60) and is part of a superordinate rotation-speed control loop (2), a manipulated variable of which generates the command variable (w) of the closed-loop controller (1) alone or in combination with a feed-forward value.

14. The closed-loop controller according to claim 13, **characterized in that** the closed-loop controller (1) is configured to control the current of a three-phase motor (60) in a stator fixed frame, wherein, depending on the applied stator fixed frame, two or three measuring devices (10', 10") and two or three control devices (20', 20") are provided in order to register and control individual current components ($i_a$, $i_b$, $i_e$, $i_\alpha$, $i_\beta$) of the respective stator fixed frame independently from one another.

15. The closed-loop controller according to claim 13, **characterized in that** the closed-loop controller (1) is configured to control the current of a three-phase motor (60) in a field-oriented coordinate system, wherein for each current component ($i_q$, $i_d$) of the field-oriented coordinate system, a respective control device (20', 20") is provided, and wherein two or three measuring devices (10', 10") are provided in order to register the two current components ($i_q$, $i_d$) of the field-oriented coordinate system or, respectively, all the three current components ($i_a$, $i_b$, $i_c$) of the three-phase motor (60) independently from each other.

**Revendications**

1. Procédé de régulation comportant les étapes consistant à :

- déterminer une première grandeur d'asservissement ($r_1$),
- déterminer un premier écart de régulation ($e_1$) par une comparaison de la première grandeur d'asservissement ($r_1$) avec une grandeur de consigne (w),
- former une première grandeur de sortie de régulateur individuelle ($m_1$) à partir du premier écart de régulation ($e_1$) à l'aide d'un premier régulateur (31),
- déterminer une seconde grandeur d'asservissement ($r_2$),
- déterminer un second écart de régulation ($e_2$) par une comparaison de la seconde grandeur d'asservissement ($r_2$) avec la grandeur de consigne (w),
- former une seconde grandeur de sortie de régulateur individuelle ($m_2$) à partir du second

écart de régulation ($e_2$) à l'aide d'un second régulateur (32),

- former une grandeur de sortie de régulateur (m) à partir des deux grandeurs de sortie de régulateur individuelles, et

- utiliser la grandeur de sortie de régulateur (m) pour ajuster la grandeur de régulation (x), de telle sorte que la grandeur de régulation (x) suit la grandeur de consigne (w),

**caractérisé en ce que**

la première grandeur d'asservissement ($r_1$) est déterminée par échantillonnage d'une grandeur de régulation (x) avec une fréquence d'échantillonnage ($f_A$), la valeur réelle ($x_{ist}$) de la grandeur de régulation (x) étant à chaque fois relevée à un instant ($t_1$, $t_2$, $t_3$, $t_4$) déterminé par la fréquence d'échantillonnage ($f_A$), et la seconde grandeur d'asservissement ($r_2$) est déterminée par mise en moyenne de la grandeur de régulation (x), la valeur réelle ($x_{ist}$) de la grandeur de régulation (x) étant relevée sur une période de temps ($T_s$) et une valeur moyenne ($x_{int}$) étant formée à partir de celle-ci.

2. Procédé de régulation selon la revendication 1, **caractérisé en ce que** la grandeur de sortie de régulateur (m) est formée par addition des deux grandeurs de sortie de régulateur individuelles ($m_1$, $m_2$).

3. Procédé de régulation selon la revendication 1 ou 2, **caractérisé en ce que** la seconde grandeur d'asservissement ($r_2$) est déterminée par une intégration de la valeur réelle ($x_{ist}$) de la grandeur de régulation (x) sur la période de temps ($T_s$).

4. Procédé de régulation selon l'une quelconque des revendications précédentes, **caractérisé en ce que** pour ajuster la grandeur de régulation (x), une grandeur de réglage (y) cadencée à une fréquence de commutation ($f_s$) est formée à partir de la grandeur de sortie de régulateur (m), dans lequel l'échantillonnage de la grandeur de régulation (x) s'effectue au double de la fréquence de commutation ($f_s$) et/ou la valeur moyenne ($x_{int}$) de la grandeur de régulation (x) est formée sur une période de temps qui correspond à une période de commutation ($T_s$) prédéfinie par la fréquence de commutation ($f_s$) de la grandeur de réglage (y) ou un multiple entier de cette période de commutation ($T_s$).

5. Procédé de régulation selon la revendication 4, **caractérisé en ce que** l'échantillonnage de la grandeur de régulation (x) s'effectue de manière synchrone par rapport à un signal d'horloge à l'aide duquel la grandeur de réglage (y) est cadencée.

6. Procédé de régulation selon l'une quelconque des revendications précédentes, **caractérisé en ce que** l'échantillonnage s'effectue à chaque fois à un instant sans harmonique de la grandeur de régulation (x).

7. Dispositif de régulation comportant :

- un dispositif de mesure (10) qui est conçu pour déterminer une première grandeur d'asservissement ($r_1$) et une seconde grandeur d'asservissement ($r_2$),

- un dispositif de comparaison (20) comportant un premier et un second éléments de comparaison (21, 22), dans lequel le premier élément de comparaison (21) est conçu pour former un premier écart de régulation ($e_1$) par une comparaison de la première grandeur d'asservissement ($r_1$) avec une grandeur de consigne (w), et dans lequel le second élément de comparaison (22) est conçu pour former un second écart de régulation ($e_2$) par une comparaison de la seconde grandeur d'asservissement ($r_2$) avec la grandeur de consigne (w),

- un dispositif de régulation (30) comportant un premier et un second régulateurs (31, 32), dans lequel le premier régulateur (31) est conçu pour former une première grandeur de sortie de régulateur individuelle ($m_1$) à partir du premier écart de régulation ($e_1$), et dans lequel le second régulateur (32) est conçu pour former une seconde grandeur de sortie de régulateur individuelle ($m_2$) à partir du second écart de régulation ($e_2$),

- un dispositif d'addition (40) qui est conçu pour former une grandeur de sortie de régulateur (m) à partir des deux grandeurs de sortie de régulateur individuelles ($m_1$, $m_2$), et

- un dispositif de réglage (50) qui est conçu pour ajuster la grandeur de régulation (x) à l'aide de la grandeur de sortie de régulateur (m) de telle sorte que la grandeur de régulation (x) suit la grandeur de consigne (w),

**caractérisé en ce que** '

ledit dispositif de mesure (10) est conçu pour déterminer la première grandeur d'asservissement ($r_1$) par échantillonnage d'une grandeur de régulation (x) à une fréquence d'échantillonnage ($f_A$), la valeur réelle ($x_{ist}$) de la grandeur de régulation (x) étant à chaque fois relevée à un instant ($t_1$, $t_2$, $t_3$, $t_4$) déterminé par la fréquence d'échantillonnage ($f_A$), et la seconde grandeur d'asservissement ($r_2$) par mise en moyenne de la grandeur de régulation (x), la valeur réelle ($x_{ist}$) de la grandeur de régulation (x) étant relevée sur une période de temps ($T_s$) et une valeur moyenne ($x_{int}$) étant formée à partir de celle-ci.

8. Dispositif de régulation selon la revendication 7, **caractérisé en ce que** le premier régulateur (31) est un régulateur proportionnel et/ou le second régulateur (32) est un régulateur intégral.

9. Dispositif de régulation selon la revendication 7 ou 8, **caractérisé en ce que** le dispositif de mesure (10) comporte un dispositif d'intégration (12) pour former la valeur réelle mise en moyenne ($x_{ist}$) par une intégration de la grandeur de régulation (x) sur la période de temps ($T_s$).

10. Dispositif de régulation selon l'une quelconque des revendications précédentes, **caractérisé en ce que** le dispositif de réglage (50) comporte un modulateur de largeur d'impulsion (51) pour cadencer la grandeur de réglage (y).

11. Dispositif de régulation selon l'une quelconque des revendications précédentes, **caractérisé en ce que** le dispositif de régulation (30) est conçu comme un régulateur numérique.

12. Dispositif de régulation selon la revendication 11, **caractérisé en ce que** le dispositif de mesure (10) comporte un modulateur delta-sigma (13) pour numériser des signaux analogiques, et le dispositif d'intégration (12) et/ou un dispositif d'échantillonnage (11) du dispositif de mesure (10) est mis en oeuvre sous forme d'algorithmes dans un composant à semi-conducteur programmable.

13. Dispositif de régulation selon l'une quelconque des revendications précédentes, **caractérisé en ce que** le dispositif de régulation (1) est conçu comme un régulateur de courant d'une charge (60) et constitue une partie d'un circuit de régulation de vitesse principal (2) dont la grandeur de réglage forme, seule ou combinée avec une grandeur de commande pilote, la grandeur de consigne (w) du dispositif de régulation (1).

14. Dispositif de régulation selon la revendication 13, **caractérisé en ce que** le dispositif de régulation (1) est conçu pour réguler le courant d'un moteur à courant alternatif (60) dans un système de coordonnées fixes de stator, dans lequel indépendamment du système de coordonnées fixes de stator utilisé, deux ou trois dispositifs de mesure (10', 10") et deux ou trois dispositifs de régulation (20', 20") sont prévus pour relever et réguler des composantes de courant individuelles ($i_a$, $i_b$, $i_c$, $i_\alpha$, $i_\beta$) du système de coordonnées de stator respectif indépendamment les unes des autres.

15. Dispositif de régulation selon la revendication 13, **caractérisé en ce que** le dispositif de régulation (1) est conçu pour réguler le courant d'un moteur à courant alternatif (60) dans un système de coordonnées vectorielles, dans lequel pour chaque composante de courant ($i_q$, $i_d$) du système de coordonnées vectorielles est prévu un dispositif de régulation spécifique (20', 20"), et dans lequel deux ou trois dispositifs de mesure (10', 10") sont prévus pour relever les deux composantes de courant ($i_q$, $i_d$) du système de coordonnées vectorielles, ou la totalité des trois composantes de courant ($i_a$, $i_b$, $i_c$) du moteur à courant alternatif (60) indépendamment les unes des autres.

EP 2 111 569 B1

# Fig. 1

# Fig. 2

EP 2 111 569 B1

Fig. 3

# Fig. 4

$$x_{int} = \frac{1}{T_S} \int_{t_0}^{t_0+T_S} x\, dt$$

EP 2 111 569 B1

Fig. 5

Fig. 6A

## Fig. 6B

EP 2 111 569 B1

# Fig. 7

EP 2 111 569 B1

# Fig. 8

EP 2 111 569 B1

# Fig. 9

EP 2 111 569 B1

**IN DER BESCHREIBUNG AUFGEFÜHRTE DOKUMENTE**

**In der Beschreibung aufgeführte Patentdokumente**

- WO 2005111402 A
- US 2006022657 A1
- DE 4000663 C1
- DE 102005023453 A1
- DE 19961798 A1